# EUROPEAN PATENT SPECIFICATION

(11) **EP 4 100 594 B1**
(45) Date of publication and mention of the grant of the patent: **17.07.2024**
(21) Application number: 21703361.2
(22) Date of filing: 21.01.2021
(51) Int. Cl.: E04G 21/12, E04C 5/16, E04C 5/06, F16B 7/04

(54) **BINDING STRUCTURE ASSEMBLY AND MOUNTING DEVICE**
BINDUNGSSTRUKTURANORDNUNG UND MONTAGEVORRICHTUNG
ENSEMBLE DE STRUCTURE DE LIAISON ET DISPOSITIF DE MONTAGE

(30) Priority: 05.02.2020 DK PA202000147
(43) Date of publication of application: 14.12.2022
(73) Proprietor: CMC Elements ApS, 8600 Silkeborg (DK)
(72) Inventor: CLEMENT, Ole, 8600 Silkeborg (DK)
(74) Representative: Andreasen, Søren Laursen Vasegaard
(86) International application number: PCT/DK2021/050019
(87) International publication number: WO 2021/155894

(56) References cited:
- WO-A1-2014/186927
- KR-A- 20150 032 953
- US-A1- 2003 196 321
- US-B1- 7 143 563

## Description

### Field of invention

The present invention relates to a binding structure assembly comprising a plurality of binding structures (locking ties) for attaching two structures such as steel reinforcements to each other, wherein each binding structure comprises an elongated body portion having a first end portion and a second end portion. The present invention also relates to a method for locking structures to each other by using such a binding structure assembly and a mounting device. The present invention moreover relates to a mounting device for mounting a binding structure of a binding structure assembly.

### Prior art

In many structural concrete constructions, it is required to use (steel) reinforcement (e.g. rebars) in the associated concrete work. There are several ways to tie the rebars. Often, the (steel) reinforcement (e.g. rebars) is tied with annealed steel wire, either bought in bulk rolls, or if using a bag tie spinner, in bundles of pre-cut wire pieces with loops formed on both ends. The latter is considered to be easier for novices to use, but somewhat more expensive, the former is often the choice of experienced rebar tiers (rodbusters). Attachment of the known attachment structures requires, however, application of two arms. Accordingly, it would be desirable to have an alternative binder that can be attached with a single hand.

US2004702 discloses an elastic lace adapted for use in connection with boots and shoes. The elastic shoelace has on each end thereof an arrow-shaped anchoring head of resilient material. Accordingly, the elastic shoelace is easy to insert in the eyelet of the boot or shoe and will after insertion automatically assume an anchoring position with respect to the eyelet which will cause no discomfort to the user. DE202012103866U1 discloses a binder element for fastening two elongated bodies to each other. The binder element is adapted for fastening a plant part on a tension wire. The binder element comprises an eyelet made by an elastic material and a hooking head connected to the eyelet.

US20180266110A1 discloses a method for securing rebar prior to concrete pour consisting of tying completely by hand, in a series of unique steps, a piece of gauge steel wire with two loops on either end around the rebar intersections.

US2003196321A1 discloses a tool for applying clip fasteners which are bent around thin objects to tie them together. The tool has a housing that presents a load opening through which the clip fasteners are loaded. A retractable clip follower is urged by spring action against the fasteners to feed them toward a receiver having a slot for holding the fasteners one at a time. The clip fasteners can be arranged in a substantially flat sheet in which the bodies of the fasteners are connected side by side. In each sheet, the adjacent fastener bodies are connected by a plurality of frangible connecting pins. The clip fasteners have, however, a very complex geometry comprising several elbow joints. Accordingly, it would be an advantage to be able to provide a simpler and cheaper alternative.

None of these prior art documents provide practical solutions that can be attached fast enough.

Thus, there is a need for an improved binding structure that enables an easier and faster attachment of reinforcement structures (such as rebars) to each other.

It is an object of the invention to provide an improved binding structure assembly with binding structures that enable an easier and faster attachment of reinforcement structures (such as rebars) to each other. It is also an object of the invention to provide a mounting device configured to tie together such a binding structure.

### Summary of the invention

The object of the present invention can be achieved by a binding structure assembly as defined in claim 1. Preferred embodiments are defined in the dependent subclaims, explained in the following description and illustrated in the accompanying drawings.

The object of the present invention can be achieved by a binding structure assembly that comprises a plurality of binding structures, arranged side by side and being attached to their neighbouring binding structure, wherein the binding structures are configured for attaching two structures to each other, wherein each binding structure comprising a straight elongated body portion having a first end portion and a second end portion, wherein a head portion is provided in the first end portion and in the second end portion, wherein said head portions protrude radially from at least a portion of the body portion, wherein the binding structure assembly is provided in a sheet-like structure, wherein the elongated body portion extends between the first head portion and the second head portion of the binder structure, wherein a micro joint is provided between adjacent head portions, wherein the micro joints are provided at the head portions of the binding structures and protrude therefrom, wherein adjacent binding structures can be detached from each other by providing a force that pulls the binding structures away from each other, wherein the binding structures are made by a punching process from a metal sheet, wherein the body portion has rectangular cross section.

Hereby, it is possible to provide a binding structure assembly that enables an easier and faster attachment of reinforcement structures (such as rebars) to each other than the prior art solutions. Moreover, it is possible to transport, store and handle the binding structure assembly in a manner in which the relative position of the binding structures can be maintained.

The binding structure is configured to be used for attaching two or more structures to each other. Such structures may in particular be rebars in a concrete construction.

The binding structure comprises an elongated body portion having a first end portion and a second end portion. The elongated body portion is a structure having a uniform cross section.

The binding structures according to the invention is a binding structure configured to attach two structures to each other, wherein the binding structure comprises an elongated body portion having a first end portion and a second end portion, wherein a head portion is provided in the first end portion and in the second end portion, wherein said head portions protrude radially from at least a portion of the body portion.

The cross section of the body portion is rectangular.

A head portion is provided in the first end portion and in the second end portion, wherein said head portion protrudes radially from (at least a portion of) the body portion. A head portion is defined as a structure having a larger width than the adjacent portion of the body portion that is arranged next to the head portion.

Preferably, the head portion is made in a massive material. Hereby, it is possible to compress the head portion without deforming the head portion.

In one embodiment, the binding structure is massive so that the head portions are resistant to compressive forces and thus can be held by a mounting device hereby allowing a fast attachment of the binding structures to structures such as rebars for a concrete construction.

According to the invention the binding structures are made by a punching process from a metal sheet.

It may be beneficial that the punching process is followed by a subsequent mechanical process, in which a plurality of binding structures are arranged sided by side, wherein adjacent binding structures are attached to each other by using a suitable attachment method.

In one embodiment not according to the invention, the binding structures are combined into a biding structure assembly by using a joining agent to joint adjacent binding structures.

In one embodiment not according to the invention, the joining agent is glue. In one embodiment not according to the invention, the joining agent is paper based.

In one embodiment not according to the invention, the joining agent is plastic-based such as hot melt.

In one embodiment not according to the invention, the adjacent binding structures are joined by using mechanical attachment structures.

According to the invention the adjacent binding structures are joined by using micro joints being small structures extending between adjacent head portions of adjacent binding structures.

In one embodiment, each binding structure is deformed by a mechanical deformation process. Such process may involve that a tool is applied to provide an impact on either side of the binding structure, in such a manner that the deformation leads to the formation of a first head portion and a second head portion.

In a preferred embodiment, the deformation process is carried out by exposing each binding structure to a force extending along the length of the binding structure, wherein the force is directed towards the free ends of the binding structure. In one embodiment, both free ends of a binding structure are simultaneously exposed to a force extending along the length of the binding structure towards the central portion of the binding structure.

It may be an advantage that the binding structure comprises an intermediate structure provided between the first end portion and the second end portion, wherein the width of a portion of the intermediate structure is smaller than the width of the head portion.

In one embodiment, the body portion constitutes the intermediate structure.

In one embodiment, a portion of the body portion constitutes the intermediate structure.

In one embodiment, the intermediate structure has a width of 0.3-5 mm. In one embodiment, the intermediate structure has a width of 0.5-3 mm. In one embodiment, the intermediate structure has a width of 1-2 mm.

It is beneficial that the elongated body portion comprises a uniform cross section. Hereby, it is possible to manufacture the body portion from a standard sheet material having a uniform cross section.

It may be an advantage that the elongated body portion is provided with a narrow portion having a smaller width than the remaining part of the elongated body portion. Hereby, it is possible to predefine where the bending will occur. This may be an advantage when a pre-defined bending area is required or beneficial.

In one embodiment, the narrow portion has a width that is 80% or less of the width of the internal structure. In one embodiment, the narrow portion has a width that is 70% or less of the width of the internal structure. In one embodiment, the narrow portion has a width that is 60% or less of the width of the internal structure. In one embodiment, the narrow portion has a width that is 50% or less of the width of the internal structure. In one embodiment, the narrow portion has a width that is 40% or less of the width of the internal structure.

In one embodiment, the binder structure is made of steel. In another embodiment, the binder structure is made of aluminium.

It may be advantageous that the binder structure is made of heat-treated steel.

In one embodiment, the binder structure is made of annealed steel.

In one embodiment, the binder structure is made of calcined steel.

By the term sheet-like structure is meant that the binding structures are arranged in a manner, in which the binding structures extend or can be arranged in a configuration, in which the binding structures extend in the same plane. Accordingly, several binding structure assemblies may be stacked. Thus, it is possible to store the binding structures in a manner, in which a limited amount of space is required.

In a preferred embodiment, the binding structures are basically straight and extend parallel to each other.

It may be advantageous that the binding structures have the same geometry and length and are provided next to each other.

Preferably, the binding structures extend in the same direction so that the longitudinal axes of the binding structures extend parallel to each other.

In one embodiment, the binding structures in the binding structure assembly are arranged in such a manner that:
a) the binding structures extend parallel to each other so that the longitudinal axes of the binding structures are parallel and
b) the head portions of adjacent binding structures extend along a line that is angled with an angle different from 90 degrees relative to the longitudinal axes of the binding structures

In one embodiment, the angle is in the range 92 - 15 degrees. In one embodiment, the angle is in the range 95 - 130 degrees. In one embodiment, the angle is in the range 100 - 120 degrees.

Thus, larger flexibility when storing the binding structures are achieved. It may be an advantage that a micro joint is provided between adjacent head portions. Hereby, it is possible to maintain the binding structures in a fixed position relative to each other. At the same time, the micro joint makes it possible to detach two adjacent binding structures from each other.

Preferably, adjacent binding structures are fixed to each other by a first micro joint and a second micro joint.

In a preferred embodiment, the binding structures are fixed to each other by a first micro joint provided in the first head portion and by a second micro joint provided in the second head portion.

In one embodiment the micro joints extend perpendicular to the longitudinal axis of the binding structure. In one embodiment, the thickness of the micro joints is 0.001-2.0 mm. In another embodiment, the thickness of the micro joints is 0.002-1.0 mm. In a further embodiment, the thickness of the micro joints is 0.004-0.8 mm.

A typical mounting device used for securing rebar ties are the so-called rebar hook tool. The tool works by having a hook attached to a rotatable telescopic pole (a rotation member). The user places the ties around the desired area and then places the hook under the ties, and by pulling away from the ties, the hook gets into contact with the rebar ties while spinning thus tying together the ties such that they are secure.

As the invention describes new binding structure assemblies, it is also desirable to provide a device that is configured to mount binding structures of the binding structure assembly according to the invention.

The mounting device according to the invention as defined in claim 10 is a mounting device configured and arranged to tie together a binding structure of a binding structure assembly according to the invention, wherein the mounting device comprises a gripping portion configured to receive and hold the head portions of the binding structure, wherein the mounting device comprises a rotation member configured to rotate the gripping portion upon displacing the rotation member along the longitudinal axis of the mounting device, wherein the gripping portion is configured to, upon displacing the rotation member along the longitudinal axis of the mounting device, be automatically (during use of the mounting device) arranged in:
a) a closed configuration, in which the gripping portion maintains the binding structure and
b) an open configuration, in which the gripping portion releases the binding structure,

wherein the open configuration is achieved upon further displacing the rotation member along the longitudinal axis of the mounting device
when the mounting device has initially been arranged in the closed configuration,
wherein a spring extends between the first base portion and the second base portion,
wherein each base portion comprises a receiving opening configured to simultaneously receive:
   - a part of the first head portion of the binding structure and
   - a part of the second head portion of the binding structure,
wherein the receiving opening is equipped with:
   - a first recess configured to receive and maintain said part of the first head portion of the binding structure in a fixed position of the base portion and
   - a second recess configured to receive and maintain said part of the second head portion of the binding structure in a fixed position of the base portion, wherein the that the gripping portion comprises:
   - a first base portion rotatably attached to a joint member by means of a first shaft and
   - a second base portion rotatably attached to the joint member by means of a second shaft, wherein the first shaft and the second shaft extend parallel to each other, wherein a spring extends between the first base portion and the second base portion, wherein each base portion comprises a receiving opening configured to simultaneously receive:
      - a part of a first head portion of the binding structure and
      - a part of the other head portion of the binding structure,
wherein the receiving opening is equipped with:
   - a first recess configured to receive and maintain said part of the first head portion of the binding structure in a fixed position of the base portion (22, 22') and
   - a second recess configured to receive and maintain said part of the second head portion of the binding structure in a fixed position of the base portion.

Hereby, it is possible to provide a mounting device that can be used to tie together a binding structure according to the invention in a fast and user-friendly manner.

It is an advantage that, the gripping portion comprises:
- a first base portion rotatably attached to a joint member by means of a first shaft and
- a second base portion rotatably attached to the joint member by means of a second shaft,
wherein the first shaft and the second shaft extend parallel to each other.

It is an advantage that, a spring extends between the first base portion and the second base portion. Hereby, the gripping portion can be kept in a closed configuration in an easy and reliable manner.

It is an advantage that, each base portion comprises a receiving opening configured to simultaneously receive:
- a part of a first head portion of the binding structure and
- a part of the other head portion of the binding structure,
wherein the receiving opening is equipped with:
- a first recess configured to receive and maintain said part of the first head portion of the binding structure in a fixed position of the base portion and
- a second recess configured to receive and maintain said part of the second head portion of the binding structure in a fixed position of the base portion.

In one embodiment, the gripping portion comprises two base portions attached to a prior art type rotatable telescopic pole of a rebar hook tool.

In one embodiment, the mounting device comprises a helical structure extending between the base portion and an end structure provided in the proximal end of the mounting device.

In one embodiment, the mounting device comprises a rotation member comprising a helical structure extending inside a surrounding spring. In one embodiment, the helical structure is rotatably mounted in a bearing that is mounted in a bearing housing.

In one embodiment, the distal end of the helical structure is attached to a stag that is attached to the bearing.

In one embodiment, the mounting device comprises a profiled member surrounding the helical structure and having a profile that matches the geometry of the cross-sectional profile of the helical structure. Accordingly, when the profiled member is pulled along the longitudinal axis of the mounting device, the helical structure will be rotated due to the retraction of the profiled member.

In one embodiment, the helical structure is attached to a guide structure that is attached to a joint member. In one embodiment, the joint member is attached to the base portions. In one embodiment, a metal plate and a resilient member formed as a rubber plate are sandwiched between the guide structure and the joint member.

In one embodiment, the mounting device comprises a pull structure that is attached to the profiled member, wherein the pull structure is arranged and configured to translate the profiled member along the length of the mounting device. Accordingly, when the pull structure and the profiled member is displaced along the length of the mounting device, the helical structure will be rotated and thus the base portions will be rotated with the same rotational velocity as the helical structure. Thus, the mounting device can easily mount binding structures according to the invention and release the binding structure when mounted. The surrounding spring will return the pull structure to its starting position.

In a further embodiment, the receiving portion comprises two bracket structures, wherein the bracket structures are basically L-shaped and comprise two parallel holding structures. In one embodiment, the holding structures are plate structures.

### Description of the Drawings

The invention will become more fully understood from the detailed description given herein below. The accompanying drawings are given by way of illustration only, and thus, they are not limitative of the present invention. In the accompanying drawings:
- Fig. 1A: shows a schematic view of a portion of a binding structure;
- Fig. 1B: shows a schematic view of a portion of another binding structure;
- Fig. 1C: shows a schematic view of a portion of a further binding structure;
- Fig. 1D: shows a schematic view of a portion of another binding structure;
- Fig. 1E: shows a schematic view of a portion of a further binding structure;
- Fig. 1F: shows a schematic view of a portion of an even further binding structure ;
- Fig. 2A: shows a view of how reinforcement structures are being attached to each other by using a prior art steel wire;
- Fig. 2B: shows another view of attaching reinforcement structures to each other by using a steel wire;
- Fig. 3A: shows a perspective view of a binding structure assembly according to the invention;
- Fig. 3B: shows a perspective view of a binding structure from the binding structure assembly shown in Fig. 3A;
- Fig. 4A: shows a perspective view of a binding structure assembly according to the invention;
- Fig. 4B: shows a close-up view of a portion of the binding structure assembly shown in Fig. 4A;
- Fig. 4C: shows a close-up view of a portion of a binding structure;
- Fig. 5: shows a front view of a binding structure assembly according to the invention;
- Fig. 6: shows steps of a process for manufacturing a binding structure assembly according to the invention;
- Fig. 7A: shows a perspective view of a binding structure arranged in a mounting device;
- Fig. 7B: shows a close-up view of an end portion of a binding structure arranged in the mounting device shown in Fig. 5A;
- Fig. 8A: shows a base portion of a mounting device according to the invention;
- Fig. 8B: shows two base portions of a mounting device according to the invention in a configuration, in which no binding structure has been attached to the base portions;
- Fig. 8C: shows the two base portions shown in Fig. 8B, in a configuration in which a binding structure has been attached to the base portions;
- Fig. 8D: shows the two base portions shown in Fig. 8B and Fig. 8C, in a configuration in which the base portions have released the binding structure;
- Fig. 8E: shows the two base portions shown in Fig. 8D, in a configuration in which the base portions have been removed from the binding structure;
- Fig. 9A: shows a metal sheet, from which binding structures according to the invention can be made;
- Fig. 9B: shows a binding structure assembly made from the metal sheet shown in Fig. 9A after a punching process has been carried out;
- Fig. 9C: shows a close-up view of a portion of a binding structure from the binding structure assembly shown in Fig. 9B;
- Fig. 9D: shows the binding structure shown in Fig. 9C in a configuration, in which the side portions of the elongated body portion have been bent;
- Fig. 9E: shows a cross-sectional view of the elongated body portion of the binding structure shown in Fig. 9C;
- Fig. 9F: shows a cross-sectional view of the elongated body portion of the binding structure shown in Fig. 9D;
- Fig. 9G: shows a cross-sectional view of two binding structures each having an elongated body portion like the binding structure shown in Fig. 9D;
- Fig. 9H: shows a cross-sectional view of two binding structures;

- Fig. 9I: shows a cross-sectional view of the elongated body portion of a binding structure shown in Fig. 9H;
- Fig. 10A: shows a mounting device according to the invention;
- Fig. 10B: shows a view of the mounting device shown in Fig. 10A;
- Fig. 10C: shows a close-up view of the mounting device shown in Fig. 10A and Fig. 10B;
- Fig. 10D: shows a close-up view of a joint member and two base portions of a mounting device according to the invention and
- Fig. 11: shows a side view of two base portions of a mounting device corresponding to the one shown in Fig. 10A, Fig. 10B, Fig. 10 C.

### Detailed description of the invention

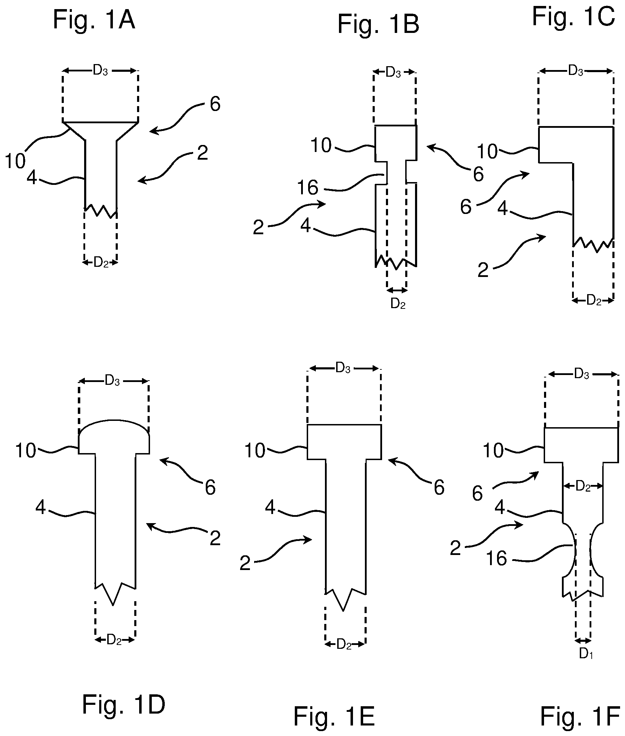

Referring now in detail to the drawings for the purpose of illustrating preferred embodiments of the present invention, a portion of a binding structure 2 is illustrated in Fig. 1A.

Fig. 1A illustrates a schematic view of a portion of a binding structure 2. The binding structure 2 comprises an elongated body portion 4 extending between a first head portion 10 and a second head portion (not shown). It can be seen that the head portion 10 protrudes from the body portion 4 and that the width D₃ of the head portion 10 is larger than the width D₂ of the body portion 4.

The first head portion 10 is arranged at the first end portion 6 of the binding structure 2. Likewise, the second head portion (not shown) is arranged at a second end portion (not shown) provided in the opposite end than the first end portion 6 of the binding structure 2.

The head portion 10 has a conical geometry. In one embodiment, the cross-sectional area of the head portion 10 is circular. In another embodiment, the cross-sectional area of the head portion 10 is rectangular (e.g. square). In a further embodiment, the cross-sectional area of the head portion 10 is oval.

By having a head portion 10 that protrudes from the body portion 4, it is possible to hold the binding structure 2 by using the head portion 10. Fig. 1B illustrates a schematic view of a portion of another binding structure 2. The binding structure 2 comprises an elongated body portion 4 extending between a first head portion 10 and a second head portion (not shown) arranged in the opposite end of the binding structure 2. The head portion 10 protrudes from the body portion 4 and the width D₃ of the head portion 10 is larger than the width D₂ of a narrow portion 16 of the body portion 4. The first head portion 10 is arranged at the first end portion 6 of the binding structure 2 and the second head portion (not shown) is arranged at the opposite (second) end portion (not shown) of the binding structure 2.

The head portion 10 has a rectangular cross-sectional area. The narrow portion 16 is provided between two adjacent portions having the same width D₃.

The head portion 10 protruding from the body portion 4 enables the head portion 10 to be used to fix the binding structure 2 to (e.g. a receiving structure of) a tool.

Fig. 1C illustrates a schematic view of a portion of a further binding structure 2. The binding structure 2 comprises an elongated body portion 4 extending between a first head portion 10 and a second head portion which is not shown, but is arranged in the opposite end of the binding structure 2. The head portion 10 protrudes from the body portion 4 so that the first end portion 6 of the binding structure 2 constitutes an L-shaped portion.

The width D₃ of the head portion 10 is approximately twice as large as the width D₂ of the body portion 4. The first head portion 10 is arranged at the first end portion 6 of the binding structure 2.

In one embodiment, the head portion 10 has a rectangular cross-sectional area. In another embodiment, the head portion 10 has a circular or oval cross-sectional area.

The protruding portion of the head portion 10 can be used to fix the binding structure 2 to (e.g. a receiving structure of) a tool. Hereby, the use of a hand to hold the binding structure 2 can be eliminated.

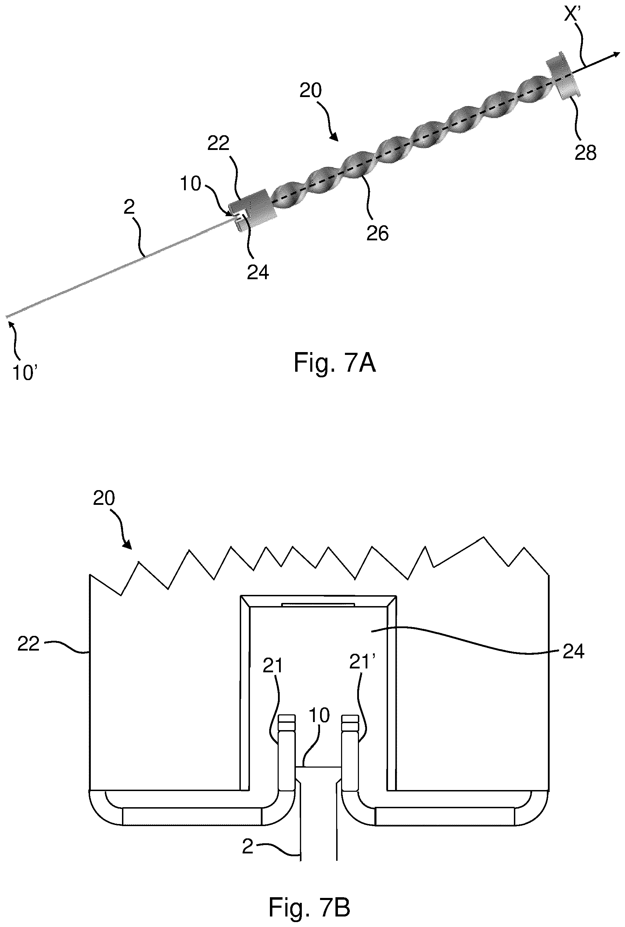

Fig. 1D illustrates a schematic view of a portion of another binding structure 2. The binding structure 2 comprises an elongated body portion 4 that is sandwiched between a first head portion 10 and a second head portion (not shown). The head portion 10 protrudes from the body portion 4. The width D₃ of the head portion 10 is larger than the width D₂ of the body portion 4. Accordingly, it is possible to hold the binding structure 2 (e.g. in a mounting tool shown in Fig. 7A) by using the head portion 10.

The first head portion 10 is arranged at the first end portion 6 of the binding structure 2. The second head portion (which is not shown) is arranged at a second end portion (not shown) provided in the opposite end than the first end portion 6 of the binding structure 2.

Fig. 1E illustrates a schematic view of a portion of a further binding structure 2. The binding structure 2 basically corresponds to the one shown in Fig. 1D. The first head portion 10 is, however, shaped slightly differently. Whereas in Fig. 1D, the top portion of the first head portion 10 is arced, the first head portion 10 is flat in Fig. 1E.

Fig. 1F illustrates a schematic view of a portion of an even further binding structure 2. The binding structure 2 basically corresponds to the one shown in Fig. 1E. A narrow portion 16 is, however, provided in the body portion 4 of the binding structure 2.

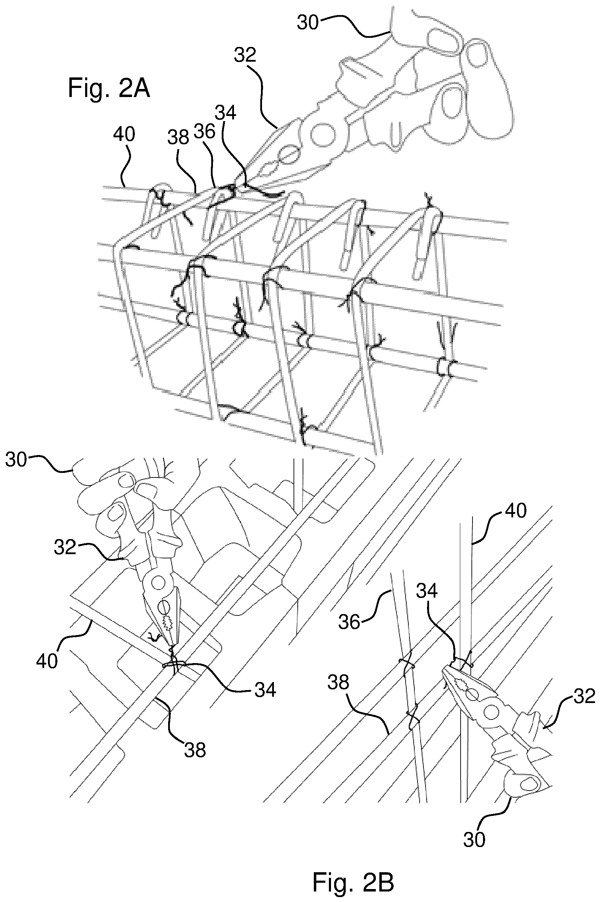

Fig. 2A illustrates a perspective view of reinforcement structures 36, 38, 40 that are being attached to each other by using a prior art steel wire 34. A worker holds a tool (pliers) 32 in his hand 30. By means of the tool 32, the worker can bind/tie the wire 34 around the structures 36, 38, 40 to be attached to each other.

Fig. 2B illustrates how structures 36, 38, 40 to be attached to each other by using a wire 34 and pliers 32.

This prior art way of attaching the structures 36, 38, 40 to each other is time consuming and requires two free hands. Accordingly, it would be desirable to have an alternative to this way of locking structures to each other.

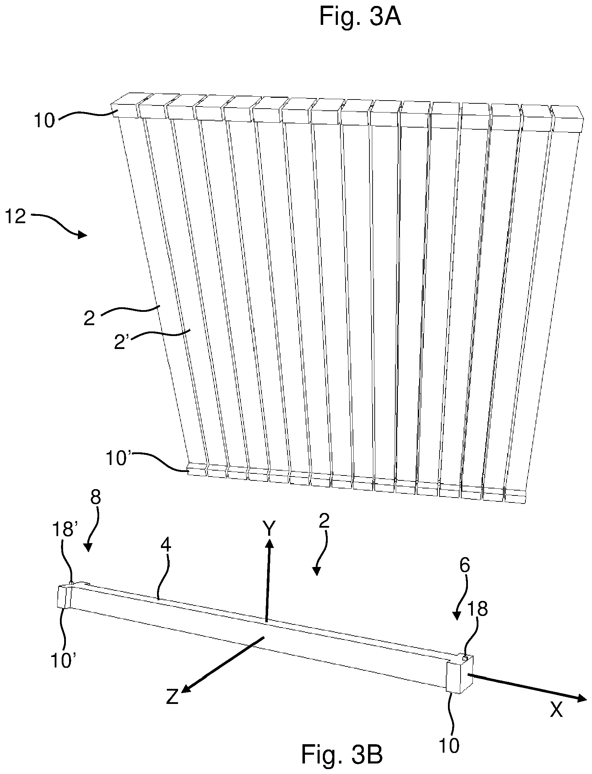

Fig. 3A illustrates a perspective view of a binding structure assembly 12 according to the invention. The binding structure assembly 12 comprises a plurality of binding structures 2 arranged side by side and being attached to their neighbouring binding structure 2'. Each binding structure 2, 2' comprises an elongated body portion that extends, in a straight manner, between a first head portion 10 and a second head portion 10 of the binder structure 2, 2'.

Neighbouring binding structures 2, 2' are attached to each other by means of at least one micro joint 18, 18' as the ones shown in Fig. 3B. The micro joints 18, 18' are provided at the head portions 10, 10' of the binding structures 2, 2' and protrude therefrom. Accordingly, adjacent binding structures 2, 2' can be detached from each other by providing a force that pulls the binding structures 2, 2' away from each other.

The head portions 10, 10' protrudes from the elongated body and hereby provides an attachment portion suitable for being used to maintain the binding structures 2, 2' in a mounting device as the one shown in Fig. 7A.

Fig. 3B illustrates a perspective view of a binding structure 2 from the binding structure assembly 12 shown in Fig. 3A. It can be seen that the binding structure 2 comprises an elongated body portion 4 extending along the length and the longitudinal axis X of the binding structure 2.

In the first end portion 6 of the binding structure 2, a first, basically box-shaped head portion 10 is provided. The head portion 10 protrudes along a first lateral axis Z of the binding structure 2 and protrudes from the body portion 4. A micro joint 18 extends along a second lateral axis Y of the binding structure 2 and protrudes from the head portion 10.

In the second (opposite) end portion 8 of the binding structure 2, a second, basically box-shaped head portion 10' is provided. The head portion 10' protrudes along a first lateral axis Z of the binding structure 2 and protrudes from the body portion 4. A micro joint 18' extends along a second lateral axis Y of the binding structure 2 and protrudes from the head portion 10. The body portion 4 has a uniform cross section (rectangular).

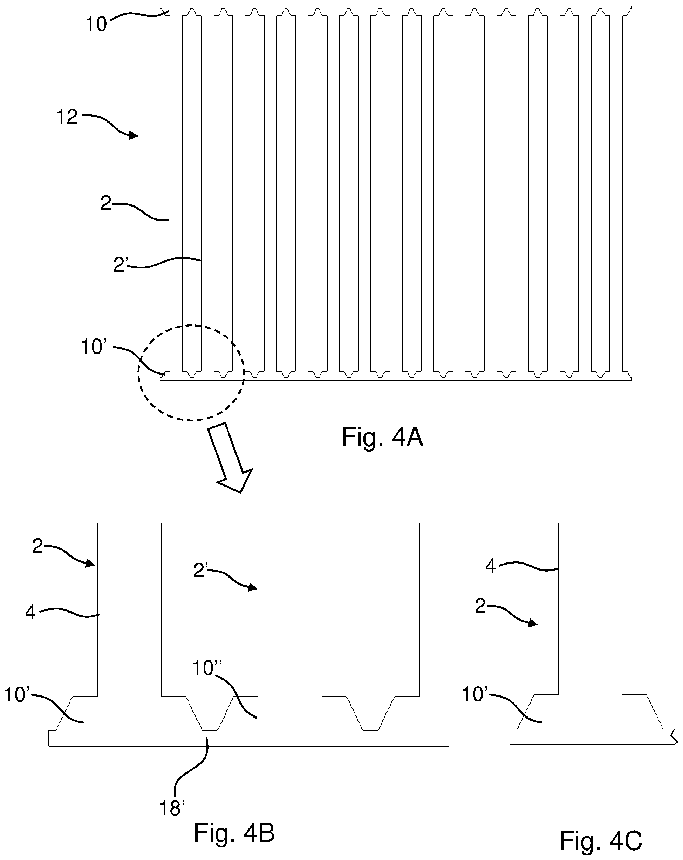

Fig. 4A illustrates a perspective view of a binding structure assembly 12 according to the invention. The binding structure assembly 12 comprises a plurality of binding structures 2 arranged side by side and being attached to their neighbouring binding structure 2'.

Every binding structure 2, 2' comprises a straight elongated body portion that extends between a first head portion 10 and a second head portion 10' of the binder structure 2, 2'.

Neighbouring binding structures 2, 2' are attached to each other in the first end portion by means of a first micro joint 18 and in the second (opposite) end portion by means of a second micro joint 18'.

The micro joints 18, 18' are provided at the head portions 10, 10' of the binding structures 2, 2' and protrude therefrom. Therefore, adjacent binding structures 2, 2' can be detached from each other by providing a force that pulls the binding structures 2, 2' away from each other.

The head portions 10, 10' constitute attachment portions that are suitable for being used to maintain the binding structures 2, 2' in a mounting device as the one shown in Fig. 7A.

Fig. 4B illustrates a close-up view of the second end portion of the binding structure assembly shown in Fig. 4A. It can be seen that a first binding structure 2 is attached to a second adjacent binding structure 2' by means of a micro joint 18' extending between the adjacent head portions 10', 10" of the adjacent binding structures 2, 2'. The thickness of the micro joint 18' may be selected so that the binding structure assembly can be stored, transported and handled without detachment of adjacent head portions 10', 10".

On the other hand, the thickness of the micro joint 18' should be selected so that adjacent binding structures 2, 2' can be pulled away from each other during use of the binding structure assembly.

In one embodiment, the thickness of the micro joint 18' is 0.001-2.0 mm. In another embodiment, the thickness of the micro joint 18' is 0.002-1.0 mm. In a further embodiment, the thickness of the micro joint 18' is 0.004-0.8 mm.

Fig. 4C illustrates a close-up view of the second portion of a binding structure 2. The binding structure 2 has been detached from the other binding structure 2' (shown in Fig. 4B).

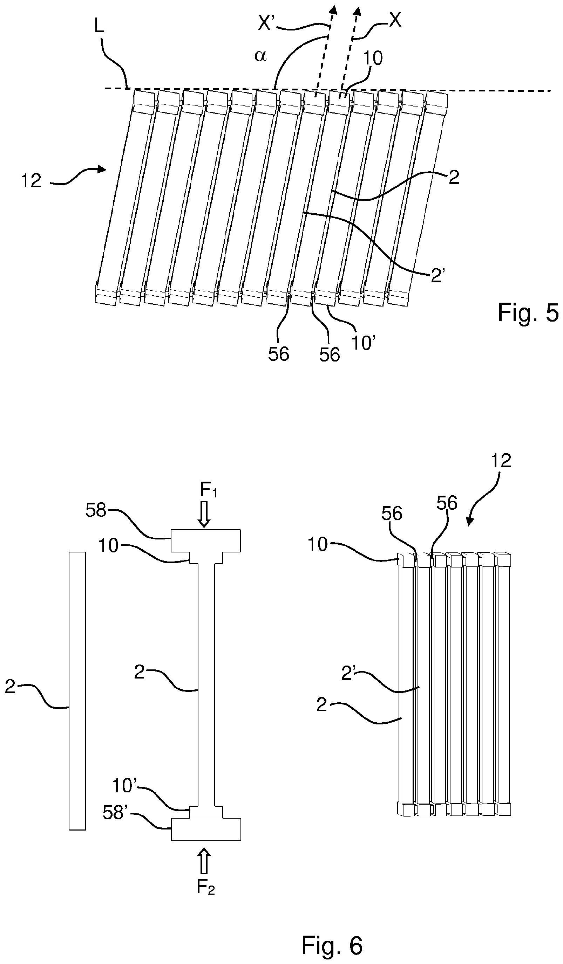

Fig. 5 illustrates a front view of a binding structure assembly 12 according to the invention. The binding structure assembly 12 comprises a plurality of binding structures 2, 2' each comprising a straight elongated body portion that extends between a first head portion 10 and a second head portion 10' of the binder structure 2, 2'. The binding structures 2, 2' of the binding structure assembly 12 are arranged in such a manner that:
a) the binding structures 2, 2' extend parallel to each other so that the longitudinal axes X, X' of the binding structures 2, 2' are parallel and
b) the head portions 10, 10' of adjacent binding structures 2, 2' extend along a line L that is angled with an angle 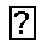 different from 90 degrees relative to the longitudinal axes X, X' of the binding structures 2, 2'.

In one embodiment, the angle α is in the range 92 - 150 degrees. In the embodiment of in Fig. 5 the angle α is approximately 110 degrees. It can be seen that a joint structure 56 is provided between adjacent head portions 10, 10' of the binding structures 2, 2'. The joint structure 56 may be a mechanical structure that is attached to and extends between the adjacent head portions 10, 10'. In one embodiment, the joint structures 56 may be glue arranged between adjacent head portions 10, 10' to keep the adjacent head portions 10, 10' attached to each other.

Fig. 6 illustrates a process for manufacturing a binding structure assembly 12 according to the invention. The manufacturing process is carried out by carrying out a first step, in which a plurality of binding structures 2, 2' are provided. The binding structures 2, 2' are punched out from a metal sheet (not shown). It can be seen that in the initial stage (after the first step) as shown to the left, the binding structure 2 comprises a straight elongated body portion. The manufacturing process comprises a second step, in which the binding structure 2 is deformed under mechanical forces F₁, F₂ provided toward the end portions of the binding structure 2. This step (a mechanical processing) is carried out by using deformation tools 58, 58' arranged and configured to provide the said forces F₁, F₂ and hereby deform the end portions of the binding structure 2. This deformation process leads to the formation of a first head portion 10 and a second head portion 10'.

The manufacturing process comprises a third step, in which the binding structures 2, 2' are combined into a binding structure assembly 12. This may be done by using a joining agent. It can be seen that a joint structure 56 is provided between adjacent head portions 10, 10' of the binding structures 2, 2'. The joint structure 56 may be a mechanical structure that is attached to and extends between the adjacent head portions 10, 10'.

In one embodiment not according to the invention, the joining agent is glue. In another embodiment not according to the invention, the joining agent is paper-based. In a further embodiment not according to the invention, the joining agent is plastic-based such as hot melt.

The joining agent is based on mechanical attachment, namely the micro joints 18, 18' illustrated in Fig. 4B Fig. 7A illustrates a perspective view of a binding structure 2 arranged in a mounting device 20. The binding structure 2 comprises an elongated body portion extending between a first head portion 10 and a second head portion 10'. The head portions 10, 10' protrude from the body portion. The widths of the head portions 10, 10' are larger than the width of the body portion.

The mounting device 20 comprises a base portion 22 provided at the distal end of the mounting device 20. The base portion 22 is equipped with a receiving opening 24 that is configured to receive and hold the head portion 10 of the binding structure 2.

The mounting device 20 comprises a twisted portion 26 extending between the base portion 22 and an end structure 28 provided in the opposite end of the mounting device 20. The mounting device 20 is configured to be displaced along a guide structure of an additional tool (e.g. an electrical tool) adapted to rotate the mounting device 20 upon displacing the mounting device 20 along its longitudinal axis X'.

Fig. 7B illustrates a close-up view of an end portion of a binding structure 2 arranged in the mounting device 20 shown in Fig. 7A. It can be seen that the head portion 10 of the binding structure 2 is held by two bracket structures 21, 21'. The bracket structures 21, 21' are basically L-shaped and comprise two parallel holding structures. The holding structures may be provided as plate structures.

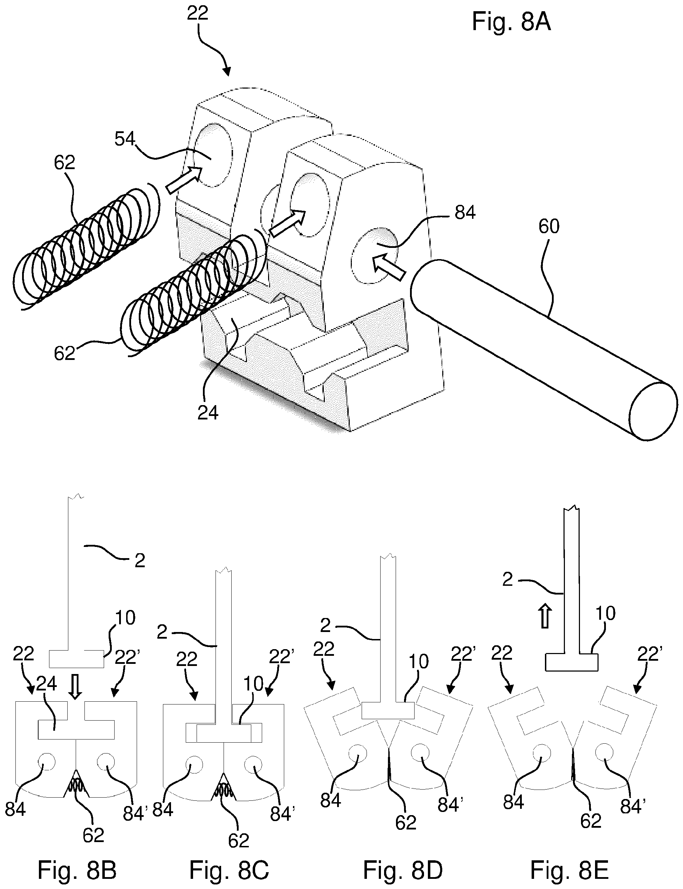

Fig. 8A illustrates a base portion 22 of a mounting device according to the invention.

Fig. 8B illustrates two base portions 22, 22' of a mounting device according to the invention in a configuration, in which no binding structure 2 has been attached to the base portions 22, 22'.

Fig. 8C illustrates the two base portions 22, 22' shown in Fig. 8B, in a configuration in which a binding structure 2 has been attached to the base portions 22, 22'.

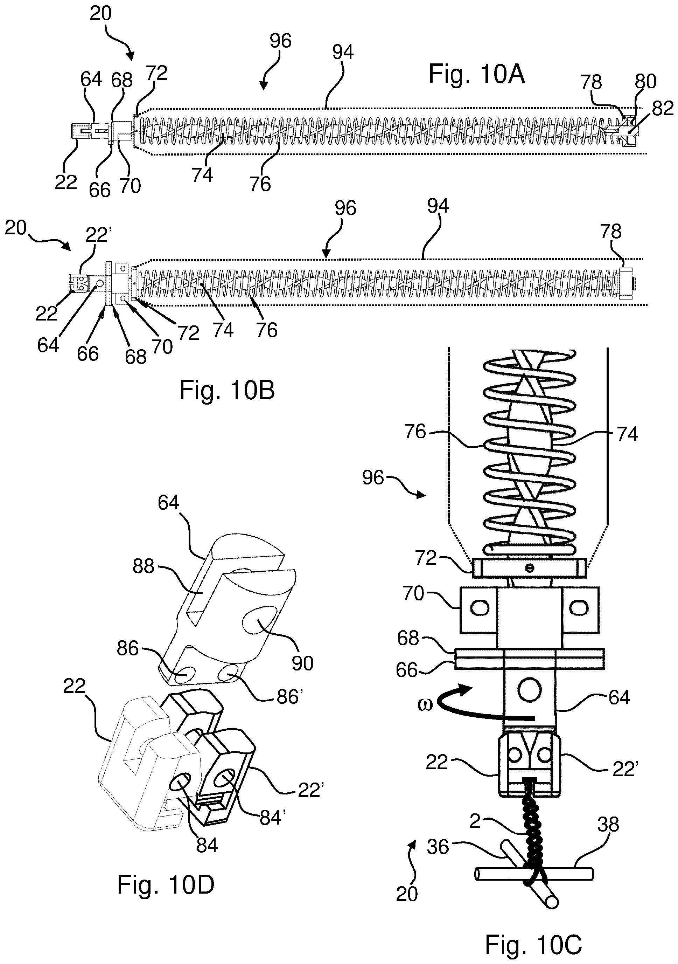

Fig. 8D illustrates the two base portions 22, 22' shown in Fig. 8B and Fig. 10C, in a configuration in which the base portions 22, 22' have released the binding structure 2.

Fig. 8E illustrates the two base portions 22, 22' shown in Fig. 8D, in a configuration in which the base portions 22, 22' have been removed from the binding structure 2. Each base portion 22 comprises receiving openings 24, wherein each receiving opening is shaped and configured to receive and hold a head portion of a binding structure (not shown).

Each base portion 22 comprises two cavities 54 extending parallel to each other and being provided above the receiving openings 24. Each of the cavities is configured to receive a spring 62.

Each base portion 22, 22' comprises a through-going bore 84, 84' that is configured to receive a corresponding shaft 60 so that the base portion 22, 22' can be rotatably mounted. Each base portion 22, 22' is configured to be displaced along a guide structure of an additional tool shown in and explained with reference to Fig. 10A, Fig. 10B and Fig. 10D. Accordingly, the mounting device is adapted to be rotated upon being displaced along its longitudinal axis.

Upon rotation of the base portions 22, 22' along the longitudinal axis of the binding structure 2, a force that will cause the base portions 22, 22' to open is gradually built up. The springs 62, however, will provide a force that rotates the base portions 22, 22' towards each other. Once the base portions 22, 22' have been rotated to a certain level, the force that causes the base portions 22, 22' to open exceeds the force that closes the base portions 22, 22'. Accordingly, upon rotation of the base portions 22, 22', the base portions 22, 22' will eventually be released as shown in Fig. 10D and Fig. 10E. The mounting device is preferably constructed in such a manner that the base portions 22, 22' are released when the binding structure is sufficiently tied together.

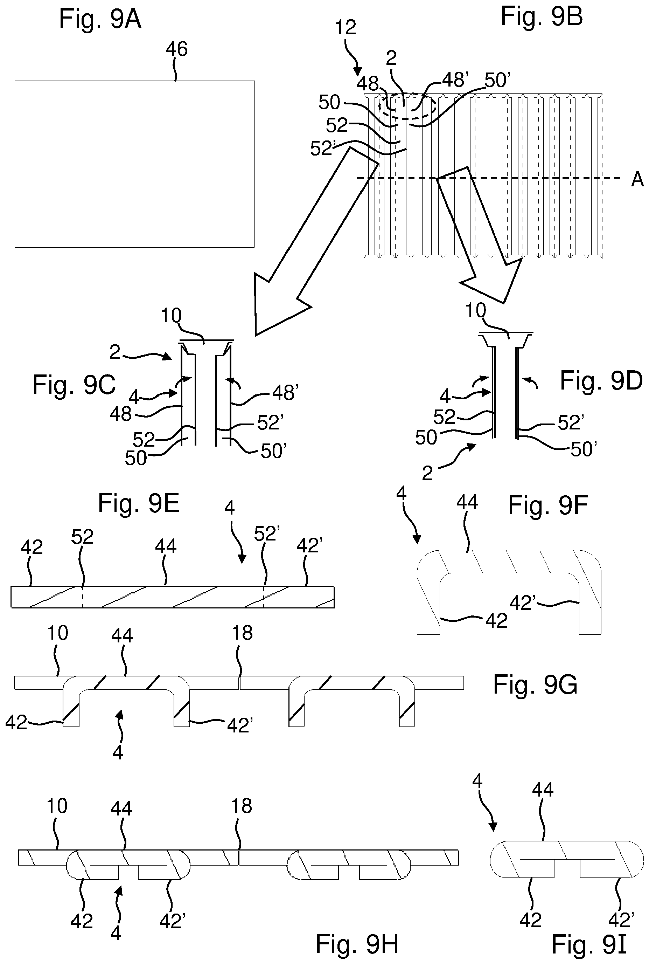

Fig. 9A illustrates a metal sheet 46 from which binding structures can be made. The metal sheet 46 may be cut from a metal roll.

Fig. 9B illustrates a binding structure assembly 12 made from the metal sheet 46 shown in Fig. 9A after a punching process has been carried out. It can be seen that the binding structure assembly 12 is provided in a sheet-like structure. The binding structure assembly 12 comprises a plurality of binding structures 2 having the same geometry and length. The binding structures 2 are provided next to each other in a manner, in which a micro joint is provided between adjacent head portions of the binding structures 2.

Each binding structure 2 is provided with two parallel punching lines 48, 48' (indicated by dotted lines) and parallel bending lines 52, 52'. The side portions 50, 50' of the elongated body portion of each binding structure are configured to be bent along its corresponding bending line 52, 52'. Accordingly, almost the entire metal sheet 46 is used (almost no metal is wasted during the manufacturing process). A cross section line A is indicated.

Fig. 9C illustrates a close-up view of a portion of a binding structure 2 from the binding structure assembly shown in Fig. 9B. It can be seen that the head portion 10 has been separated from its surroundings and that a small gap is provided between the head portion 10 and the (side portions 50, 50' of the) elongated body portion 4. The bending lines 52, 52' of the elongated body portion 4 are shown in Fig. 9C. It can be seen that the side portions 50, 50' of the elongated body portion 4 can be bent (rotated with respect to the bending lines 52, 52') as indicated with the arced arrows to achieve the configuration shown in Fig. 9D.

Fig. 9D illustrates the binding structure 2 shown in Fig. 9C in a configuration, in which the side portions 50, 50' of the elongated body portion 4 have been bent (rotation about the corresponding bending line 52, 52'). Accordingly, the head portion 10 protrudes radially from the body portion 4.

Fig. 9E illustrates a cross-sectional view (cross section along the line A shown in Fig. 9B) of the elongated body portion 4 of the binding structure shown in Fig. 9C. It can be seen that the elongated body portion 4 comprises a centrally arranged body portion 44 placed between to bent portions 42, 42' that have not yet been bent.

Fig. 9F illustrates the cross-sectional view of the elongated body portion 4 of the binding structure shown in Fig. 9D in a configuration, in which the bent portions 42, 42' are bent (90 degrees relative to the longitudinal axis of the end body portion 44).

Fig. 9G illustrates a cross-sectional view of two binding structures each having an elongated body portion like the binding structure shown in Fig. 9D. It can be seen that the head portion 10 protrudes radially from the body portion 4 and that the bent portions 42, 42' have been bent 90 degrees relative to the longitudinal axis of the end body portion 44. Besides, a micro joint 18 is provided between the two adjacent binding structures.

Fig. 9H illustrates a cross-sectional view of two binding structures 4. The head portion 10 protrudes radially from the body portion 4 and the bent portions 42, 42' have been bent 180 degrees relative to the longitudinal axis of the end body portion 44. Besides, a micro joint 18 is provided between the two adjacent binding structures.

Fig. 9I illustrates a cross-sectional view of the elongated body portion of a binding structure 4 shown in Fig. 9H. It can be seen that the bent portions 42, 42' are bent 180 degrees relative to the longitudinal axis of the end body portion 44.

Fig. 10A, Fig. 10B and Fig. 10C illustrate different views of a mounting device 20 according to the invention. The mounting device 20 comprises a rotation member 96 comprising a helical structure 74 extending inside a surrounding spring 76. The helical structure 74 is rotatably mounted in a bearing 80 that is mounted in a bearing housing 78. The distal end of the helical structure 74 is attached to a stag 82 that is attached to the bearing 80.

The mounting device 20 comprises a profiled member 72 surrounding the helical structure 74 and having a profile that matches the geometry of the cross-sectional profile of the helical structure 74. Accordingly, when the profiled member 72 is pulled along the longitudinal axis of the mounting device 20, the helical structure 74 will be rotated due to the retraction of the profiled member 72.

The helical structure 74 is attached to a guide structure 70 that is attached to a joint member 64. The joint member 64 is attached to the base portions 22, 22'. A metal plate 66 and a resilient member formed as a rubber plate 68 are sandwiched between the guide structure 70 and the joint member 64.

The mounting device 20 comprises a pull structure 94 attached to the profiled member 72 and being arranged and configured to translate the profiled member 72 along the length of the mounting device 20. Accordingly, when the pull structure 94 and the profiled member 72 are displaced along the length of the mounting device 20, the helical structure 74 will be rotated and thus the base portions 22, 22' will be rotated with the same rotational velocity ω as the helical structure 74. Thus, the mounting device 20 can easily mount binding structures 2 according to the invention and release the binding structure 2 when mounted. The surrounding spring 76 will return the pull structure 94 to its starting position (the one shown in Fig. 10A, Fig. 10B and Fig. 10C). In Fig. 10C it can be seen that the mounting device 20 is being used to mount a binding structure 2 to a couple of rebars 36, 38.

Fig. 10D illustrates a close-up view of a joint member 64 and two base portions 22, 22' of a mounting device according to the invention. The two base portions 22, 22' are equally shaped and arranged with the front facing each other. Each base portion 22, 22' comprises a through-going bore 84, 84' arranged in such a manner that two through-going bores 86, 86' provided in the flat distal portion of the joint member 64 can receive two parallel shafts inserted through the through-going bores 84, 84' of the base portion 22, 22'. The joint member 64 comprises a slotted portion 88 configured to receive a protruding flat structure of the guide structure 70. The guide structure 70 is configured to be attached to the joint member 64 by means of a pin (shaft) inserted into a through bore 90 provided in the joint member 64.

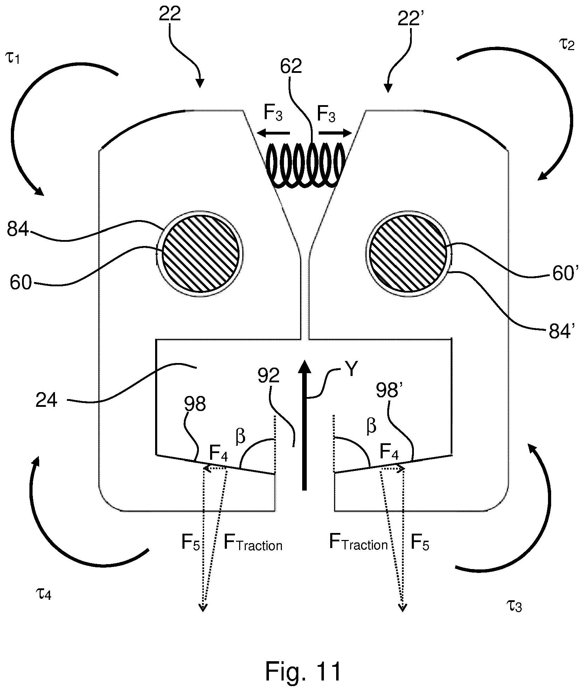

Fig. 11 illustrates a side view of two base portions 22, 22' of a mounting device corresponding to the one shown in Fig. 10A, Fig. 10B, Fig. 10C and Fig. 10D. The first (left) base portion 22 is rotatably mounted by means of a shaft 84 extending through the through bore 60. Likewise, the second (right) base portion 22' is rotatably mounted by means of a shaft 84' extending through the through bore 60'.

A spring 62 extends between the base portions 22, 22' and provides an outwardly directed force F₃ that induces:
1) a torque τ₁ that creates an anticlockwise rotation of the first base portion 22 and
2) a torque τ₂ that creates a clockwise rotation of the second base portion 22'. Accordingly, the spring 62 provides a force F₃ that closes the base portions 22, 22'.

During use of the mounting device, a binding structure is received and held inside the receiving openings 24 of the base portions 22, 22'. During rotation of the binding structure along the longitudinal axis Y of the mounting device, the binding structure will gradually provide a force F₄ of increasing size. This force F₄ will induce:
3) a torque τ₃ that creates a clockwise rotation of the first base portion 22 and
4) a torque τ₄ that creates an anticlockwise rotation of the second base portion 22'.

Accordingly, the rotation of the binding structure will eventually cause the opening of the base portions 22, 22' so that the outlet 92 is wide enough to release the head portions of the binding structure.

When pulling the binding structure along the longitudinal axis Y of the mounting device, the head portion og the binding structure will provide a tractive force F_{Traction} towards the contact surfaces 98, 98' indicated in Fig. 11. In one embodiment, the angle β between the contact surfaces 98, 98' and the along the longitudinal axis is less than 90 degrees. Hereby, the tractive force F_{Traction} will have a component F₅ extending along longitudinal axis Y of the mounting device and a component F₄ extending perpendicular to the longitudinal axis Y of the mounting device.

### List of reference numerals

- 2, 2': Binding structure
- 4: Elongated body portion
- 6: First end portion
- 8: Second end portion
- 10, 10', 10‴: Head portion
- 12: Binding structure assembly
- 14: Intermediate structure
- 16: Narrow portion
- 18, 18': Micro joint
- 20: Mounting device
- 21, 21': Bracket structure
- 22: Base portion
- 24: Receiving opening
- 26: Twisted portion
- 28: End structure
- 30: Hand
- 32: Tool (pliers)
- 34: Wire
- 36: Rebar
- 38: Rebar
- 40: Rebar
- 42, 42': Bent portion
- 44: Body portion
- 46: Sheet
- 48, 48': Punching line
- 50, 50': Side portion
- 52, 52': Bending line
- 54: Cavity for springs
- 56: Joint structure
- 58, 58': Deformation tool
- 60, 60': Shaft
- 62: Spring
- 64: Joint member
- 66: Metal plate
- 68: Resilient member (e.g. rubber plate)
- 70: Guide structure
- 72: Profiled member
- 74: Helical structure
- 76: Surrounding spring
- 78: Bearing housing
- 80: Bearing
- 82: Stag
- 84, 84: Through bore
- 88: Slotted portion
- 90: Through bore
- 92: Outlet
- 94: Pull structure
- 96: Rotation member
- 98, 98': Contact surface
- A: Cross section line
- D₁, D₂, D₃: Width
- X, Y, Z, X': Axis
- α: Angle
- F₁, F₂, F₃, F₄: Force
- F₅, F_{Traction}: Force
- X, X', Y: Longitudinal axis
- L: Line
- τ₁, τ₂, τ₃, τ₄: Torque
- ω: Rotational velocity

## Claims

1. A binding structure assembly (12), wherein the binding structure assembly (12) comprises a plurality of binding structures (2, 2') arranged side by side and being attached to their neighbouring binding structure (2, 2'), wherein the binding structures (2, 2') are configured for attaching two structures (38, 40) to each other, wherein each binding structure (2, 2') comprising a straight elongated body portion (4) having a first end portion (6) and a second end portion (8), wherein a first head portion (10) is provided in the first end portion (6) and a second head portion (10') is provided in the second end portion (8), wherein said head portions (10, 10') protrude radially from the body portion (4), wherein the binding structure assembly (12) is provided in a sheet-like structure (20), wherein the elongated body portion (4) extends between the first head portion (10) and the second head portion (10') of the binder structure (2, 2'),
wherein a micro joint (18, 18') is provided between adjacent head portions (10, 10'), wherein the micro joints (18, 18') are provided at the head portions (10, 10') of the binding structures (2, 2') and protrude therefrom, **characterised in that** adjacent binding structures (2, 2') can be detached from each other by providing a force that pulls the binding structures (2, 2') away from each other, wherein the binding structures (2) are made by a punching process from a metal sheet (46), wherein the body portion (4) has rectangular cross section.

2. A binding structure assembly (12) according to claim 1, **characterised in that** the thickness of the micro joint (18, 18') is 0.001-2.0 mm, preferably 0.002-1.0 mm such as 0.004-0.8 mm.

3. A binding structure assembly (12) according to one of the preceding claims, **characterised in that** the binding structures (2) comprise an intermediate structure (4, 16) provided between the first end portion (6) and the second end portion (8), wherein the width (D₁, D₂) of a portion of the intermediate structure (4, 16) is smaller than the width (D₃) of the head portion (10, 10').

4. A binding structure assembly (12) according to one of the preceding claims, **characterised in that** the elongated body portion (4) comprises a uniform cross section.

5. A binding structure assembly (12) according to one of the preceding claims, **characterised in that** the elongated body portion (4) is provided with a narrow portion (16) having a smaller width than the remaining part of the elongated body portion (4).

6. A binding structure assembly (12) according to one of the preceding claims, **characterised in that** the binder structures (2) are made of metal.

7. A binding structure assembly (12) according to one of the preceding claims, **characterised in that** the binder structures (2) are made of heat-treated steel.

8. A binding structure assembly (12) according to one of the preceding claims, **characterised in that** the binding structures (2) have the same geometry and length and are provided next to each other.

9. A binding structure assembly (12) according to claim 8, **characterised in that** the binding structures (2) in the binding structure assembly (12) are arranged in such a manner that:
a) the binding structures (2) extend parallel to each other so that the longitudinal axes (X, X') of the binding structures (2) are parallel and
b) the head portions (10, 10') of adjacent binding structures (2) extend along a line (L) that is angled with an angle (α) different from 90 degrees relative to the longitudinal axes (X, X') of the binding structures (2).

10. A mounting device (20) configured to tie together a binding structure (2, 2') of a binding structure assembly (12) according to one of the preceding claims, wherein the mounting device (20) comprises a gripping portion (22, 22') configured to receive and hold the head portions (10, 10') of the binding structure (2, 2'), wherein the mounting device (20) comprises a rotation member (96) configured to rotate the gripping portion (22, 22') upon displacing the rotation member (96) along the longitudinal axis of the mounting device (20), whereby the gripping portion (22, 22') is configured to, upon displacing the rotation member (96) along the longitudinal axis of the mounting device (20), be automatically arranged in:
a) a closed configuration, in which the gripping portion (22, 22') maintains the binding structure (2) and
b) an open configuration, in which the gripping portion (22 22') releases the binding structure (2),
wherein the open configuration is achieved upon further displacing the rotation member (96) along the longitudinal axis of the mounting device (20) when the mounting device (20) has initially been arranged in the closed configuration,
wherein a spring (62) extends between the first base portion (22) and the second base portion (22'),
wherein each base portion (22, 22') comprises a receiving opening (24) configured to simultaneously receive:
- a part of the first head portion (10) of the binding structure (2) and
- a part of the second head portion (10') of the binding structure (2),
wherein the receiving opening (24) is equipped with:
- a first recess configured to receive and maintain said part of the first head portion (10) of the binding structure (2) in a fixed position of the base portion (22, 22') and
- a second recess configured to receive and maintain said part of the second head portion (10) of the binding structure (2) in a fixed position of the base portion (22, 22'), wherein the that the gripping portion (22 22') comprises:
- a first base portion (22) rotatably attached to a joint member (64) by means of a first shaft (60) and
- a second base portion (22') rotatably attached to the joint member (64) by means of a second shaft (60'), wherein the first shaft (60) and the second shaft (60') extend parallel to each other, wherein a spring (62) extends between the first base portion (22) and the second base portion (22'), wherein each base portion (22, 22') comprises a receiving opening (24) configured to simultaneously receive:
- a part of a first head portion (10) of the binding structure (2) and
- a part of the other head portion (10') of the binding structure (2),
wherein the receiving opening (24) is equipped with:
- a first recess configured to receive and maintain said part of the first head portion (10) of the binding structure (2) in a fixed position of the base portion (22, 22') and
- a second recess configured to receive and maintain said part of the second head portion (10) of the binding structure (2) in a fixed position of the base portion (22, 22').

11. A method for binding together the two ends of a binding structure (2, 2') of a binding structure assembly (12) according to one of the claims 1-9 by using a mounting device (20) according to claim 10.

## Patentansprüche

1. Bindungsstrukturanordnung (12), wobei die Bindungsstrukturanordnung (12) eine Vielzahl von Bindungsstrukturen (2, 2') umfasst, die nebeneinander angeordnet sind und an ihrer benachbarten Bindungsstruktur (2, 2') befestigt sind, wobei die Bindungsstrukturen (2, 2') zum Befestigen von zwei Strukturen (38, 40) aneinander konfiguriert sind, wobei jede Bindungsstruktur (2, 2') einen geraden, länglichen Körperabschnitt (4) umfasst, der einen ersten Endabschnitt (6) und einen zweiten Endabschnitt (8) aufweist, wobei ein erster Kopfabschnitt (10) im ersten Endabschnitt (6) bereitgestellt ist und ein zweiter Kopfabschnitt (10') im zweiten Endabschnitt (8) bereitgestellt ist, wobei die Kopfabschnitte (10, 10') radial vom Körperabschnitt (4) vorstehen, wobei die Bindungsstrukturanordnung (12) in einer blattartigen Struktur (20) bereitgestellt ist, wobei der längliche Körperabschnitt (4) sich zwischen dem ersten Kopfabschnitt (10) und dem zweiten Kopfabschnitt (10') der Bindungsstruktur (2, 2') erstreckt,
wobei eine Mikroverbindung (18,18') zwischen benachbarten Kopfabschnitten (10, 10') bereitgestellt ist, wobei die Mikroverbindungen (18, 18') an den Kopfabschnitten (10, 10') der Bindungsstrukturen (2, 2') bereitgestellt sind und von diesen vorstehen, **dadurch gekennzeichnet, dass** benachbarte Bindungsstrukturen (2, 2') durch Bereitstellen einer Kraft voneinander gelöst werden können, die die Bindungsstrukturen (2, 2') voneinander wegzieht, wobei die Bindungsstrukturen (2) durch einen Stanzprozess aus einem Metallblech (46) hergestellt sind, wobei der Körperabschnitt (4) einen rechteckigen Querschnitt aufweist.

2. Bindungsstrukturanordnung (12) nach Anspruch 1, **dadurch gekennzeichnet, dass** die Dicke der Mikroverbindung (18, 18') 0,001-2,0 mm, vorzugsweise 0,002-1,0 mm, beispielsweise 0,004-0,8 mm beträgt.

3. Bindungsstrukturanordnung (12) nach einem der vorstehenden Ansprüche, **dadurch gekennzeichnet, dass** die Bindungsstrukturen (2) eine zwischen dem ersten Endabschnitt (6) und dem zweiten Endabschnitt (8) bereitgestellte Zwischenstruktur (4, 16) umfassen, wobei die Breite (D₁, D₂) eines Abschnitts der Zwischenstruktur (4, 16) kleiner als die Breite (D₃) des Kopfabschnitts (10, 10') ist.

4. Bindungsstrukturanordnung (12) nach einem der vorstehenden Ansprüche, **dadurch gekennzeichnet, dass** der längliche Körperabschnitt (4) einen gleichmäßigen Querschnitt umfasst.

5. Bindungsstrukturanordnung (12) nach einem der vorstehenden Ansprüche, **dadurch gekennzeichnet, dass** der längliche Körperabschnitt (4) mit einem schmalen Abschnitt (16) bereitgestellt ist, der eine geringere Breite als der restliche Teil des länglichen Körperabschnitts (4) aufweist.

6. Bindungsstrukturanordnung (12) nach einem der vorstehenden Ansprüche, **dadurch gekennzeichnet, dass** die Bindungsstrukturen (2) aus Metall hergestellt sind.

7. Bindungsstrukturanordnung (12) nach einem der vorstehenden Ansprüche, **dadurch gekennzeichnet, dass** die Bindungsstrukturen (2) aus Vergütungsstahl hergestellt sind.

8. Bindungsstrukturanordnung (12) nach einem der vorstehenden Ansprüche, **dadurch gekennzeichnet, dass** die Bindungsstrukturen (2) die gleiche Geometrie und Länge aufweisen und nebeneinander bereitgestellt sind.

9. Bindungsstrukturanordnung (12) nach Anspruch 8, **dadurch gekennzeichnet, dass** die Bindungsstrukturen (2) in der Bindungsstrukturanordnung (12) derart angeordnet sind, dass:
a) die Bindungsstrukturen (2) sich parallel zueinander erstrecken, sodass die Längsachsen (X, X') der Bindungsstrukturen (2) parallel sind, und
b) die Kopfabschnitte (10, 10') benachbarter Bindungsstrukturen (2) sich entlang einer Linie (L) erstrecken, die in einem von 90 Grad abweichenden Winkel (α) gegenüber den Längsachsen (X, X') der Bindungsstrukturen (2) abgewinkelt ist.

10. Montagevorrichtung (20), die dazu konfiguriert ist, eine Bindungsstruktur (2, 2') einer Bindungsstrukturanordnung (12) nach einem der vorstehenden Ansprüche zusammenzubinden, wobei die Montagevorrichtung (20) einen Greifabschnitt (22, 22') umfasst, der dazu konfiguriert ist, die Kopfabschnitte (10, 10') der Bindungsstruktur (2, 2') aufzunehmen und zu halten, wobei die Montagevorrichtung (20) ein Drehelement (96) umfasst, das dazu konfiguriert ist, den Greifabschnitt (22, 22') beim Verschieben des Drehelements (96) entlang der Längsachse der Montagevorrichtung (20) zu drehen, wodurch der Greifabschnitt (22, 22') dazu konfiguriert ist, beim Verschieben des Drehelements (96) entlang der Längsachse der Montagevorrichtung (20) automatisch angeordnet zu werden in:
a) einer geschlossenen Konfiguration, in der der Greifabschnitt (22, 22') die Bindungsstruktur (2) hält, und
b) einer offenen Konfiguration, in der der Greifabschnitt (22, 22') die Bindungsstruktur (2) freigibt,
wobei die offene Konfiguration durch weiteres Verschieben des Drehelements (96) entlang der Längsachse der Montagevorrichtung (20) erreicht wird, wenn die Montagevorrichtung (20) ursprünglich in der geschlossenen Konfiguration angeordnet war,
wobei sich zwischen dem ersten Basisabschnitt (22) und dem zweiten Basisabschnitt (22') eine Feder (62) erstreckt,
wobei jeder Basisabschnitt (22, 22') eine Aufnahmeöffnung (24) umfasst, die dazu konfiguriert ist, gleichzeitig Folgendes aufzunehmen:
- einen Teil des ersten Kopfabschnitts (10) der Bindungsstruktur (2) und
- einen Teil des zweiten Kopfabschnitts (10') der Bindungsstruktur (2), wobei die Aufnahmeöffnung (24) ausgestattet ist mit:
- einer ersten Aussparung, die dazu konfiguriert ist, den Teil des ersten Kopfabschnitts (10) der Bindungsstruktur (2) in einer festen Position des Basisabschnitts (22, 22') aufzunehmen und zu halten, und
- einer zweiten Aussparung, die dazu konfiguriert ist, den Teil des zweiten Kopfabschnitts (10) der Bindungsstruktur (2) in einer festen Position des Basisabschnitts (22, 22') aufzunehmen und zu halten, wobei der Greifabschnitt (22, 22') umfasst:
- einen ersten Basisabschnitt (22), der mittels einer ersten Welle (60) drehbar an einem Verbindungselement (64) angebracht ist, und
- einen zweiten Basisabschnitt (22'), der mittels einer zweiten Welle (60') drehbar an dem Verbindungselement (64) angebracht ist, wobei die erste Welle (60) und die zweite Welle (60') sich parallel zueinander erstrecken, wobei sich eine Feder (62) zwischen dem ersten Basisabschnitt (22) und dem zweiten Basisabschnitt (22') erstreckt, wobei jeder Basisabschnitt (22, 22') eine Aufnahmeöffnung (24) umfasst, die dazu konfiguriert ist, gleichzeitig Folgendes aufzunehmen:
- einen Teil eines ersten Kopfabschnitts (10) der Bindungsstruktur (2) und
- einen Teil des anderen Kopfabschnitts (10') der Bindungsstruktur (2), wobei die Aufnahmeöffnung (24) ausgestattet ist mit:
- einer ersten Aussparung, die dazu konfiguriert ist, den Teil des ersten Kopfabschnitts (10) der Bindungsstruktur (2) in einer festen Position des Basisabschnitts (22, 22') aufzunehmen und zu halten, und
- einer zweiten Aussparung, die dazu konfiguriert ist, den Teil des zweiten Kopfabschnitts (10) der Bindungsstruktur (2) in einer festen Position des Basisabschnitts (22, 22') aufzunehmen und zu halten.

11. Verfahren zum Zusammenbinden der zwei Enden einer Bindungsstruktur (2, 2') einer Bindungsstrukturanordnung (12) nach einem der Ansprüche 1-9 unter Verwendung einer Montagevorrichtung (20) nach Anspruch 10.

## Revendications

1. Ensemble de structures de liaison (12), dans lequel l'ensemble de structures de liaison (12) comprend une pluralité de structures de liaison (2, 2') disposées côte à côte et étant fixées à leur structure de liaison voisine (2, 2'), dans lequel les structures de liaison (2, 2') sont configurées pour attacher deux structures (38, 40) l'une à l'autre, dans lequel chaque structure de liaison (2, 2') comprend une partie de corps allongée et droite (4) présentant une première partie d'extrémité (6) et une seconde partie d'extrémité (8), dans lequel une première partie de tête (10) est prévue dans la première partie d'extrémité (6) et une seconde partie de tête (10') est prévue dans la seconde partie d'extrémité (8), dans lequel lesdites parties de tête (10, 10') font saillie radialement depuis la partie de corps (4), dans lequel l'ensemble de structures de liaison (12) est prévu dans une structure en forme de feuille (20), dans lequel la partie de corps allongée (4) s'étend entre la première partie de tête (10) et la seconde partie de tête (10') de la structure de liaison (2, 2'),
dans lequel un micro-joint (18, 18') est disposé entre des parties de tête adjacentes (10, 10'), dans lequel les micro-joints (18, 18') sont disposés au niveau des parties de tête (10, 10') des structures de liaison (2, 2') et dépassent de celles-ci, **caractérisé en ce que** des structures de liaison adjacentes (2, 2') peuvent être détachées les unes des autres en appliquant une force qui éloigne les structures de liaison (2, 2') les unes des autres, dans lequel les structures de liaison (2) sont fabriquées par un processus de poinçonnage à partir d'une tôle (46), dans lequel la partie de corps (4) présente une section transversale rectangulaire.

2. Ensemble de structures de liaison (12) selon la revendication 1, **caractérisé en ce que** l'épaisseur du micro-joint (18, 18') est de 0,001 à 2,0 mm, de préférence de 0,002 à 1,0 mm, par exemple de 0,004 à 0,8 mm.

3. Ensemble de structures de liaison (12) selon l'une des revendications précédentes, **caractérisé en ce que** les structures de liaison (2) comprennent une structure intermédiaire (4, 16) disposée entre la première partie d'extrémité (6) et la seconde partie d'extrémité (8), dans lequel la largeur (D₁, D₂) d'une partie de la structure intermédiaire (4, 16) est inférieure à la largeur (D₃) de la partie de tête (10, 10').

4. Ensemble de structures de liaison (12) selon l'une des revendications précédentes, **caractérisé en ce que** la partie de corps allongée (4) comprend une section transversale uniforme.

5. Ensemble de structures de liaison (12) selon l'une des revendications précédentes, **caractérisé en ce que** la partie de corps allongée (4) est dotée d'une partie étroite (16) présentant une largeur plus petite que la partie restante de la partie de corps allongée (4).

6. Ensemble de structures de liaison (12) selon l'une des revendications précédentes, **caractérisé en ce que** les structures de liaison (2) sont en métal.

7. Ensemble de structures de liaison (12) selon l'une des revendications précédentes, **caractérisé en ce que** les structures de liaison (2) sont en acier traité thermiquement.

8. Ensemble de structures de liaison (12) selon l'une des revendications précédentes, **caractérisé en ce que** les structures de liaison (2) présentent la même géométrie et la même longueur et sont disposées les unes à côté des autres.

9. Ensemble de structures de liaison (12) selon la revendication 8, **caractérisé en ce que** les structures de liaison (2) dans l'ensemble de structures de liaison (12) sont disposées de telle manière que :
a) les structures de liaison (2) s'étendent parallèlement les unes aux autres de sorte que les axes longitudinaux (X, X') des structures de liaison (2) soient parallèles et
b) les parties de tête (10, 10') des structures de liaison adjacentes (2) s'étendent le long d'une ligne (L) qui présente un angle (α) différent de 90 degrés par rapport aux axes longitudinaux (X, X') des structures de liaison (2).

10. Dispositif de montage (20) configuré pour relier ensemble une structure de liaison (2, 2') d'un ensemble de structures de liaison (12) selon l'une des revendications précédentes, dans lequel le dispositif de montage (20) comprend une partie de préhension (22, 22') configurée pour recevoir et maintenir les parties de tête (10, 10') de la structure de liaison (2, 2'), dans lequel le dispositif de montage (20) comprend un élément de rotation (96) configuré pour faire tourner la partie de préhension (22, 22') lors du déplacement de l'élément de rotation (96) le long de l'axe longitudinal du dispositif de montage (20), selon lequel la partie de préhension (22, 22') est configurée pour, lors du déplacement de l'élément de rotation (96) le long de l'axe longitudinal du dispositif de montage (20), être automatiquement disposé en :
a) une configuration fermée, dans laquelle la partie de préhension (22, 22') maintient la structure de liaison (2) et
b) une configuration ouverte, dans laquelle la partie de préhension (22, 22') libère la structure de liaison (2),
dans lequel la configuration ouverte est obtenue en déplaçant davantage l'élément de rotation (96) le long de l'axe longitudinal du dispositif de montage (20) lorsque le dispositif de montage (20) a été initialement disposé dans la configuration fermée,
dans lequel un ressort (62) s'étend entre la première partie de base (22) et la seconde partie de base (22'),
dans lequel chaque partie de base (22, 22') comprend une ouverture de réception (24) configurée pour recevoir simultanément :
- une partie de la première partie de tête (10) de la structure de liaison (2) et
- une partie de la seconde partie de tête (10') de la structure de liaison (2), dans laquelle l'ouverture de réception (24) est équipée de :
- un premier renfoncement configuré pour recevoir et maintenir ladite partie de la première partie de tête (10) de la structure de liaison (2) dans une position fixe de la partie de base (22, 22') et
- un second renfoncement configuré pour recevoir et maintenir ladite partie de la seconde partie de tête (10) de la structure de liaison (2) dans une position fixe de la partie de base (22, 22'), dans lequel la partie de préhension (22, 22') comprend :
- une première partie de base (22) fixée de manière rotative à un élément de raccord (64) au moyen d'un premier arbre (60) et
- une seconde partie de base (22') fixée de manière rotative à l'élément de raccord (64) au moyen d'un second arbre (60'), dans lequel le premier arbre (60) et le second arbre (60') s'étendent parallèlement l'un à l'autre, dans lequel un ressort (62) s'étend entre la première partie de base (22) et la seconde partie de base (22'), dans lequel chaque partie de base (22, 22') comprend une ouverture de réception (24) configurée pour recevoir simultanément :
- une partie d'une première partie de tête (10) de la structure de liaison (2) et
- une partie de l'autre partie de tête (10') de la structure de liaison (2), dans lequel l'ouverture de réception (24) est équipée de :
- un premier renfoncement configuré pour recevoir et maintenir ladite partie de la première partie de tête (10) de la structure de liaison (2) dans une position fixe de la partie de base (22, 22') et
- un second renfoncement configuré pour recevoir et maintenir ladite partie de la seconde partie de tête (10) de la structure de liaison (2) dans une position fixe de la partie de base (22, 22').

11. Procédé pour relier ensemble les deux extrémités d'une structure de liaison (2, 2') d'un ensemble de structures de liaison (12) selon l'une des revendications 1-9 en utilisant un dispositif de montage (20) selon la revendication 10.
